# FASCICULE DE BREVET EUROPEEN

(11) **EP 4 291 763 B1**
(45) Date de publication et mention de la délivrance du brevet: **16.07.2025**
(21) Numéro de dépôt: 22703018.6
(22) Date de dépôt: 05.01.2022
(51) Int. Cl.: F01P 5/10, F01P 3/20, F01P 11/16, B60R 13/08, F01N 13/14, F01P 5/12, F01N 13/16

(54) **ENSEMBLE A SUPPORT DE POMPE ET ECRAN THERMIQUE POUR UN MOTEUR THERMIQUE**
ANORDNUNG MIT PUMPENTRÄGER UND WÄRMESCHIRM FÜR EINE WÄRMEKRAFTMASCHINE
ASSEMBLY WITH PUMP SUPPORT AND HEAT SCREEN FOR A HEAT ENGINE

(30) Priorité: 11.02.2021 FR 2101315
(43) Date de publication de la demande: 20.12.2023
(73) Titulaire: Stellantis Auto SAS, 78300 Poissy (FR)
(72) Inventeur: RAHOUTI, Fatima Zahra, CASABLANCA, 20520 (MA); KHOUKHI, Amal, CASABLANCA, 20520 (MA)
(74) Mandataire: PSIP
(86) Numéro de dépôt international: PCT/FR2022/050021
(87) Numéro de publication internationale: WO 2022/171939

(56) Documents cités:
- EP-A1- 3 203 104
- WO-A1-2014/068221
- WO-A1-2014/195001
- FR-A1- 2 983 434
- FR-A3- 2 902 706

## Description

La présente invention porte sur un ensemble à support de pompe et écran thermique pour un moteur thermique. L'invention trouve une application particulièrement avantageuse, mais non exclusive, avec les véhicules automobiles de type thermique ou hybride.

De façon connue en soi, des pompes à eau sont utilisées dans un véhicule automobile pour faire circuler un liquide à base d'eau à l'intérieur d'un circuit de refroidissement.

Contrairement à des pompes standards entraînées par la façade accessoires du moteur, des pompes à eau de type électrique peuvent être implantées plus librement dans l'environnement moteur.

Du fait de la configuration des tuyaux de liquide de refroidissement, d'un dispositif de transmission et de contraintes d'encombrement de composants situés sous le capot du véhicule, il peut être nécessaire de fixer la pompe sur le carter du moteur thermique à proximité d'un conduit d'échappement.

En outre, l'état de la technique est connu des documents FR2902706A3, FR2983434A1, EP3203104A1.

Il existe donc le besoin de disposer d'un ensemble "pompe-support de pompe" compatible avec des contraintes vibratoires et thermiques de l'environnement moteur dans lequel est implanté ledit ensemble.

L'invention vise à combler efficacement les besoins précités en proposant un ensemble pour un véhicule automobile comportant:
- un moteur thermique comportant un carter,
- une pompe,
- un support de pompe portant la pompe,
- ledit support de pompe comportant des interfaces de fixation sur le carter du moteur thermique et au moins un dispositif d'indexage en position dudit support de pompe par rapport au carter du moteur thermique, et
- un écran thermique comportant des pattes de fixation, chaque patte de fixation étant munie d'au moins une interface de fixation sur le carter du moteur thermique, ledit écran thermique comportant en outre au moins un dispositif d'indexage en position de l'écran thermique par rapport au support de pompe,
- la pompe étant emmanchée à l'intérieur d'un élément d'amortissement en forme d'anneau muni d'une base fixée sur le support de pompe.

L'invention permet ainsi de disposer la pompe dans une zone d'implantation compacte tout en la protégeant des rayonnements thermiques émanant de l'échappement. L'invention permet également de contribuer à l'amélioration de la prestation acoustique du véhicule en filtrant les vibrations du moteur thermique vers la pompe. Le montage de l'ensemble est également facilité grâce à la présence des dispositifs d'indexage en position des différents composants. L'invention s'adapte également à la diversité des pompes pouvant être fixées sur le carter du moteur thermique.

Selon une réalisation de l'invention, au moins une interface de fixation du support de pompe et une interface de fixation de l'écran thermique coopèrent avec un organe de fixation commun assurant une fixation de l'ensemble "support de pompe-écran thermique" au carter du moteur thermique.

Selon une réalisation de l'invention, le support de pompe est réalisé avantageusement dans un matériau métallique, notamment en acier.

Selon une réalisation de l'invention, le dispositif d'indexage du support de pompe comporte un ergot destiné à coopérer avec une forme creuse correspondante ménagée dans le carter du moteur thermique.

Selon une réalisation de l'invention, les interfaces de fixation du support de pompe se situent dans deux plans différents.

Selon une réalisation de l'invention, l'écran thermique comporte un corps ayant une paroi en forme de portion de cylindre et une paroi transversale d'extrémité.

Selon une réalisation de l'invention, une portion en saillie creuse est issue de la paroi en forme de portion de cylindre.

Selon une réalisation de l'invention, le dispositif d'indexage de l'écran thermique comporte un trou réalisé dans une patte de fixation destiné à coopérer avec une forme saillante correspondante ménagée dans le support de pompe.

Selon une réalisation de l'invention, le dispositif d'indexage de l'écran thermique comporte un crochet ménagé dans un bord d'une patte de fixation, ledit crochet étant destiné à coopérer avec un bord du support de pompe.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une vue en perspective d'un moteur thermique montrant la zone dans laquelle est implantée une pompe à eau;
[Fig. 2] La figure 2 est une vue en perspective d'un ensemble "pompe-support de pompe-écran thermique" destiné à être fixé sur le carter du moteur thermique;
[Fig. 3a] [Fig. 3b] Les figures 3a et 3b sont des vues en perspective illustrant la mise en place de l'ensemble "pompe-support de pompe" sur le carter du moteur thermique;
[Fig. 4] La figure 4 est une vue en perspective détaillée d'un ergot associé à une interface de fixation du support de pompe et utilisé pour l'indexage en position du support de pompe par rapport au carter du moteur thermique;
[Fig. 5a] [Fig. 5b] Les figures 5a et 5b sont des vues en perspective illustrant la mise en place et la fixation de l'écran thermique sur le carter du moteur thermique;
[Fig. 6] La figure 6 est une vue en perspective détaillée d'un crochet d'indexage de l'écran thermique par rapport au support de pompe.

Les éléments identiques, similaires, ou analogues conservent la même référence d'une figure à l'autre.

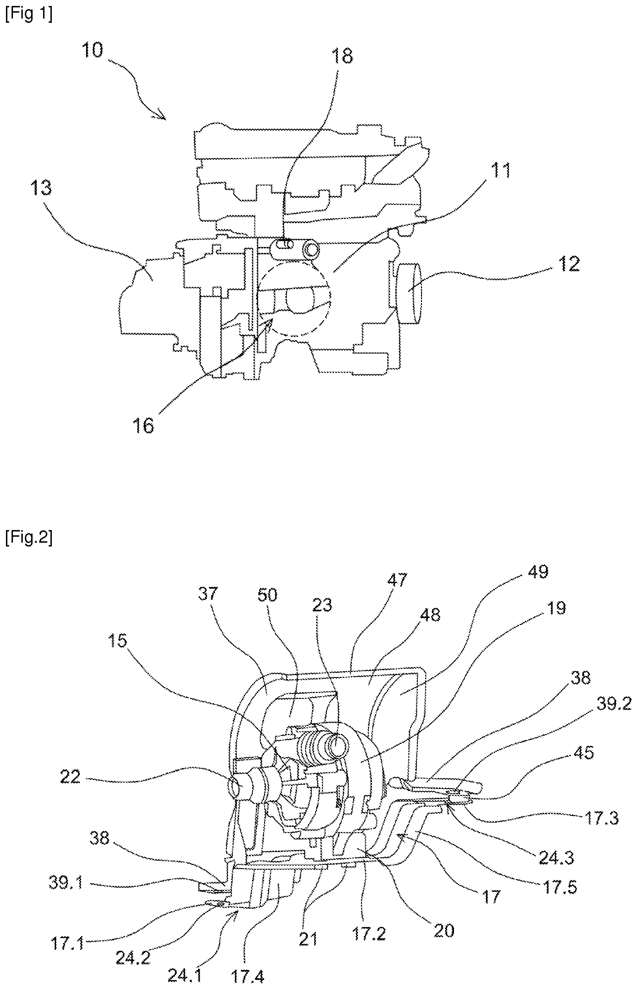

La figure 1 montre un moteur thermique 10 de véhicule automobile comportant notamment un carter 11 et une poulie 12 montée sur un vilebrequin. Le moteur thermique 10 est accouplé avec un dispositif de transmission 13. Une pompe 15 montrée sur la figure 2, notamment une pompe à eau de type électrique (qui ne nécessite donc pas d'être accouplée avec la poulie 12 du vilebrequin pour son entraînement), est destinée à être implantée dans une zone 16 située sous un démarreur 18 et à proximité d'une portion d'une ligne d'échappement (non représentée).

Comme on peut le voir sur la figure 2, la pompe 15 est portée par un support de pompe 17 destiné à être fixé sur le carter 11 du moteur thermique 10 dans la zone d'implantation 16. La pompe 15 comporte une entrée d'eau 22 et une sortie d'eau 23.

Plus précisément, la pompe 15 est emmanchée à l'intérieur d'un élément d'amortissement 19 en forme d'anneau muni d'une base 20 fixée sur le support de pompe 17. A cet effet, la base 20 comporte des plots 21 insérés à l'intérieur de gorges du support de pompe 15 et maintenus au moyen d'organes élastiques de type circlips. En variante, la base 20 pourra être vissée, rivetée, ou collée sur le support de pompe 17. Avantageusement, l'élément d'amortissement 19 est réalisé dans un matériau élastique, tel qu'un matériau élastomère ou un matériau en caoutchouc.

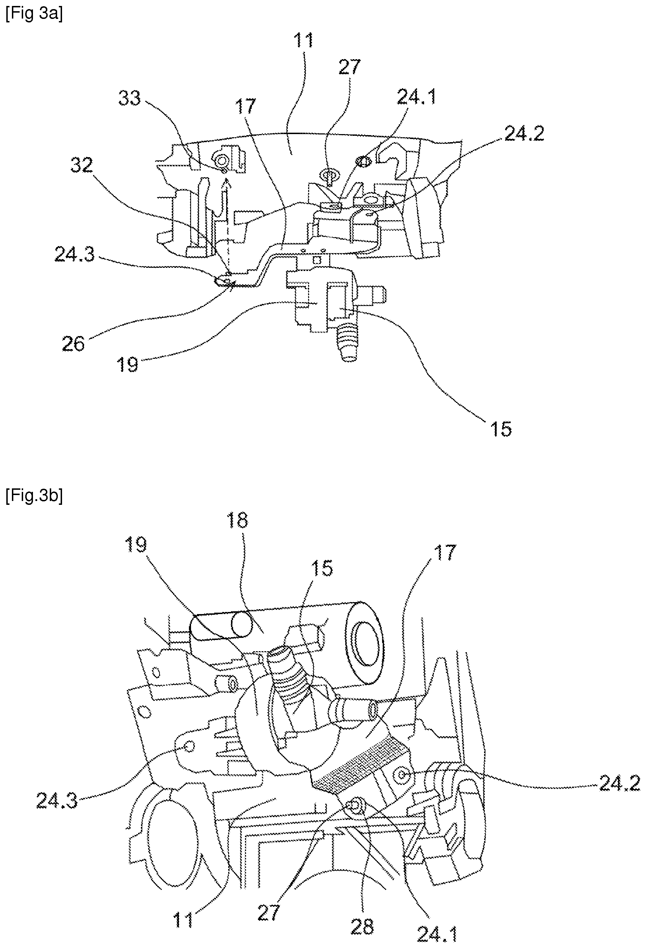

Le support de pompe 17 comporte des interfaces de fixation 24.1, 24.2, 24.3 sur le carter 11 du moteur thermique 10 et au moins un dispositif d'indexage 26 en position dudit support de pompe 17 par rapport au carter 11 du moteur thermique 10. En l'occurrence, comme on peut le voir clairement sur les figures 3a et 3b, le support de pompe 17 comporte trois interfaces de fixation 24.1, 24.2, 24.3 mais il pourrait en comporter un nombre différent pour s'adapter à d'autres environnements de moteur thermique 10.

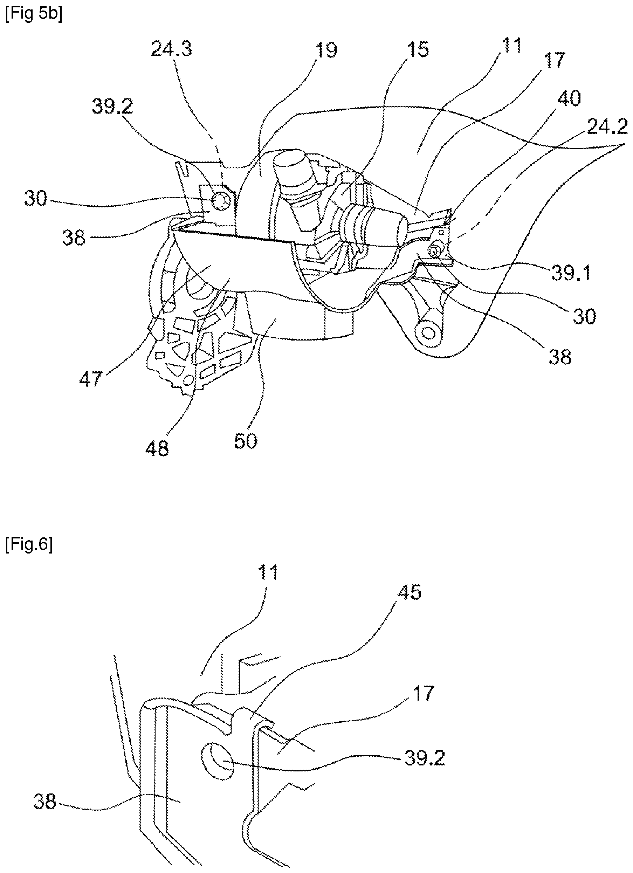

Une interface de fixation 24.1, 24.2, 24.3 comporte une ouverture à l'intérieur de laquelle est inséré un organe de fixation, tel qu'un goujon ou une vis. Dans le mode de réalisation représenté, l'interface de fixation 24.1 comporte une ouverture pour le passage d'un goujon 27 issu du carter 11 du moteur thermique 10. Un écrou 28 est destiné à coopérer avec le goujon 27. Les interfaces de fixation 24.2 et 24.3 comportent chacune une ouverture pour le passage d'une vis 30 correspondante (cf. figure 5b). Comme cela est expliqué plus en détails ci-après les vis 30 sont destinées à coopérer également avec les interfaces de fixation d'un écran thermique 37.

Les interfaces de fixation 24.1, 24.2, 24.3 pourront se situer suivant deux plans différents parallèles entre eux. Ainsi, les interfaces de fixation 24.1 et 24.2 pourront se situer dans un même plan tandis que l'interface de fixation 24.3 pourra se situer dans un plan différent.

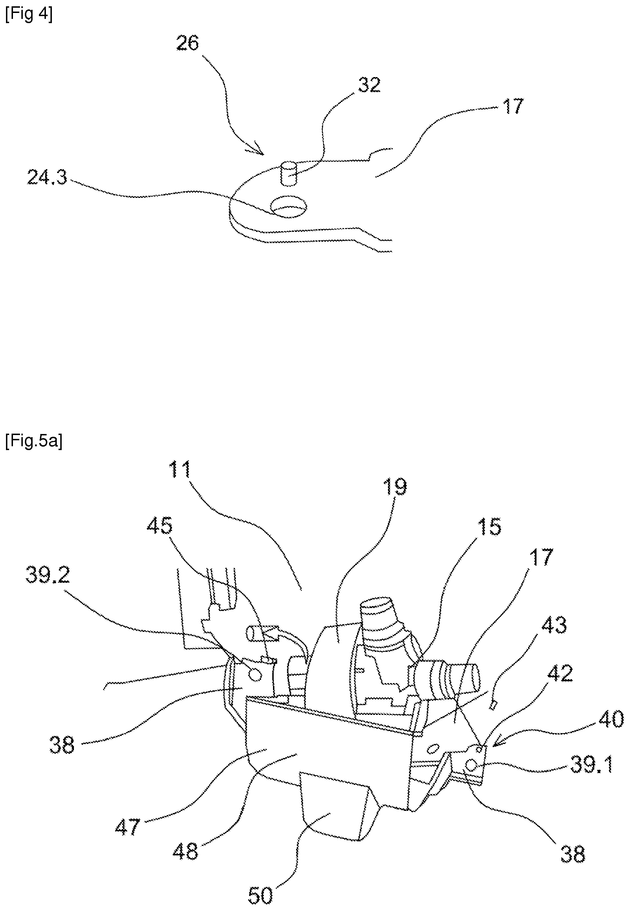

Comme on peut le voir sur la figure 4, le dispositif d'indexage 26 du support de pompe 17 comporte un ergot 32 situé à proximité d'une interface de fixation 24.2 et/ou 24.3. Cet ergot 32 est destiné à coopérer avec une forme creuse 33 correspondante ménagée dans le carter 11 du moteur thermique 10. L'ergot 32 est constitué par une portion saillante du support de pompe 17, notamment de forme cylindrique.

Comme montré sur la figure 2, le support de pompe 17 est avantageusement constitué par une plaque mise en forme par emboutissage. Le support de pompe 17 est réalisé dans un matériau métallique, notamment en acier.

Le support de pompe 17 comporte trois portions 17.1, 17.2, 17.3 s'étendant suivant trois plans distincts: deux portions 17.1, 17.3 comportant les interfaces de fixations 24.1, 24.2, 24.3 et une portion intermédiaire 17.2 sur laquelle est fixée la base 20 de l'élément d'amortissement 19. Ces trois portions 17.1-17.3 sont reliées entre elles par des portions de liaison 17.4, 17.5 mises en forme par emboutissage.

L'épaisseur du support de pompe 17 est de préférence de l'ordre de 3mm. Par "de l'ordre de", on entend une variation de plus ou moins 10% par rapport à la valeur indiquée.

Une telle configuration du support de pompe 17 permet de filtrer efficacement les vibrations du moteur thermique 10 jusqu'à des fréquences supérieures au premier mode critique du moteur thermique 10 situé autour de 200 Hz, notamment jusqu'à une fréquence de l'ordre de 300 Hz.

Par ailleurs, l'écran thermique 37 comporte des pattes de fixation 38 munies chacune d'au moins une interface de fixation 39.1, 39.2 sur le carter 11 du moteur thermique 10 et au moins un dispositif d'indexage 40 en position de l'écran thermique 37 par rapport au support de pompe 17. L'écran thermique 37 est destiné à s'étendre entre la pompe 15 et une portion d'une ligne d'échappement.

Une interface de fixation 39.1, 39.2 comporte une ouverture à l'intérieur de laquelle est inséré un organe de fixation, tel qu'une vis.

Avantageusement, une interface de fixation 24.2, 24.3 du support de pompe 17 et une interface de fixation 39.1, 39.2 de l'écran thermique 37 coopèrent avec une vis de fixation 30 commune assurant une fixation de l'ensemble au carter 11 du moteur thermique 10. Ainsi, une même vis de fixation 30 est insérée à l'intérieur du trou de passage d'une interface de fixation 24.2, 24.3 du support de pompe 17 et du trou de passage de l'interface de fixation 39.1, 39.2 d'une patte de fixation 38 de l'écran thermique 37 qui coïncident l'un avec l'autre. Cela permet de faciliter la fixation de l'ensemble "support de pompe 17-écran thermique 37".

Comme on peut le voir sur les figures 5a et 5b, le dispositif d'indexage 40 comporte un trou 42 réalisé dans une patte de fixation 38 destiné à coopérer avec une forme saillante 43 correspondante ménagée dans le support de pompe 17. En outre, comme cela est bien visible sur la figure 6, un crochet 45 ménagé dans un bord d'une patte est destiné à coopérer avec un bord du support de pompe 17.

Plus précisément, l'écran thermique 37 comporte un corps 47 dont sont solidaires les deux pattes de fixation 38, tel que cela est montré sur la figure 2. Le corps 47 présente une paroi 48 en forme de portion de cylindre et une paroi transversale d'extrémité 49. La paroi transversale d'extrémité 49 s'étend perpendiculairement à un axe de la paroi 48 en forme de portion de cylindre.

Une portion en saillie creuse 50 est issue de la portion 48 en forme de portion de cylindre. Cette portion 50 s'étend en saillie radiale par rapport à un axe de la paroi 48. Une telle configuration permet de s'adapter aux différents types de pompes 15 pouvant être utilisées, notamment une pompe basse température ou une pompe haute température ayant des configurations différentes. On évite ainsi toute interférence entre l'écran thermique 37 et les différents types de pompes 15 ayant des interfaces de fixation différentes.

De préférence, l'écran thermique 37 est réalisé en tôle, notamment en acier, particulièrement bien adapté aux rayonnements thermiques émanant d'une conduite d'échappement du moteur thermique 10.

On décrit ci-après les différentes étapes de montage de l'ensemble "pompe 15-support de pompe 17-écran thermique 37" sur le carter 11 du moteur thermique 10.

Dans un premier temps, la pompe 15 est solidarisée avec le support de pompe 17 par emmanchement à l'intérieur de l'élément d'amortissement 19.

Puis, le support de pompe 17 est mis en place dans la zone d'implantation 16. A cet effet, comme cela est représenté sur la figure 3a, le support de pompe 17 est positionné de telle façon que le goujon 27 pénètre à l'intérieur de l'ouverture de l'interface de fixation 24.1 et on fait coopérer un ergot 32 du support de pompe 17 avec une forme creuse correspondante du carter 11 moteur. L'opérateur peut alors visser un écrou 28 sur le goujon fileté 27, tel que montré sur la figure 3b.

Comme on peut le voir sur la figure 5a, l'écran thermique 37 est ensuite mis en place en faisant coopérer le crochet 45 ménagé dans un bord d'une patte de fixation 38 avec un bord du support de pompe 17. En outre, on fait coopérer un trou d'indexage 42 avec une forme saillante 43 correspondante ménagée dans le support de pompe 17. On garantit ainsi un positionnement correct de l'écran thermique 37 par rapport au support.

Comme cela est illustré par la figure 5b, il est alors possible de visser deux vis 30 pour fixer l'ensemble formé par l'écran thermique 37 et le support de pompe 17 sur la carter 11 du moteur thermique 10. Une vis 30 est insérée à l'intérieur d'une ouverture 39.1 (respectivement 39.2) d'une patte de fixation 38 de l'écran thermique 37 située en coïncidence avec une ouverture 24.2 (respectivement 24.3) correspondante du support de pompe 17 et une ouverture taraudée correspondante du carter 11 du moteur thermique 10. Une patte 38 de l'écran thermique 37 et une portion du support de pompe 17 sont alors maintenues serrées entre une tête de la vis 30 et le carter 11 du moteur thermique 10.

Toutes les étapes du procédé de montage pourront être réalisées par un opérateur ou de façon automatique par un robot.

## Revendications

1. Ensemble pour un véhicule automobile comportant:
- un moteur thermique (10) comportant un carter (11),
- une pompe (15),
- un support de pompe (17) portant la pompe (15), le support de pompe (17) comportant des interfaces de fixation (24.1, 24.2, 24.3) sur le carter (11) du moteur thermique (10) et au moins un dispositif d'indexage (26) en position dudit support de pompe (17) par rapport au carter (11) du moteur thermique (10), et
- un écran thermique (37) comportant des pattes de fixation (38), chaque patte de fixation (38) étant munie d'au moins une interface de fixation (39.1, 39.2) sur le carter (11) du moteur thermique (10), ledit écran thermique (37) comportant en outre au moins un dispositif d'indexage (40) en position de l'écran thermique (37) par rapport au support de pompe (17),
**caractérisé en ce que** la pompe (15) est emmanchée à l'intérieur d'un élément d'amortissement (19) en forme d'anneau muni d'une base (20) fixée sur le support de pompe (17).

2. Ensemble selon la revendication 1, **caractérisé en ce qu'**au moins une interface de fixation (24.2, 24.3) du support de pompe (17) et une interface de fixation (39.1, 39.2) de l'écran thermique (37) coopèrent avec un organe de fixation (30) commun assurant une fixation de l'ensemble "support de pompe (17)-écran thermique (37)" au carter (11) du moteur thermique (10).

3. Ensemble selon la revendication 1 ou 2, **caractérisé en ce que** le support de pompe (17) est réalisé avantageusement dans un matériau métallique, notamment en acier.

4. Ensemble selon l'une quelconque des revendications 1 à 3, **caractérisé en ce que** le dispositif d'indexage (26) du support de pompe (17) comporte un ergot (32) destiné à coopérer avec une forme creuse (33) correspondante ménagée dans le carter (11) du moteur thermique (10).

5. Ensemble selon l'une quelconque des revendications 1 à 4, **caractérisé en ce que** les interfaces de fixation (24.1, 24.2, 24.3) du support de pompe (17) se situent dans deux plans différents.

6. Ensemble selon l'une quelconque des revendications 1 à 5, **caractérisé en ce que** l'écran thermique (37) comporte un corps (47) ayant une paroi (48) en forme de portion de cylindre et une paroi transversale d'extrémité (49).

7. Ensemble selon la revendication 6, **caractérisé en ce qu'**une portion en saillie creuse (50) est issue de la paroi (48) en forme de portion de cylindre.

8. Ensemble selon l'une quelconque des revendications 1 à 7, **caractérisé en ce que** le dispositif d'indexage (40) de l'écran thermique (37) comporte un trou (42) réalisé dans une patte de fixation (38) destiné à coopérer avec une forme saillante (43) correspondante ménagée dans le support de pompe (17).

9. Ensemble selon l'une quelconque des revendications 1 à 8, **caractérisé en ce que** le dispositif d'indexage (40) de l'écran thermique (37) comporte un crochet (45) ménagé dans un bord d'une patte de fixation (38), ledit crochet (45) étant destiné à coopérer avec un bord du support de pompe (17).

## Patentansprüche

1. Kraftfahrzeuganordnung, umfassend:
- einer Wärmekraftmaschine (10) mit einem Gehäuse (11),
- einer Pumpe (15),
- einem die Pumpe (15) tragenden Pumpenträger (17),
wobei die Pumpenhalterung (17) Befestigungsschnittstellen (24.1, 24.2, 24.3) am Gehäuse (11) der Wärmekraftmaschine (10) und mindestens eine Indexierungsvorrichtung (26) zum Positionieren der Pumpenhalterung (17) relativ zum Gehäuse (11) der Wärmekraftmaschine (10) umfasst, und
- einen Hitzeschild (37) mit Befestigungsösen (38), wobei jede Befestigungsöse (38) mit mindestens einer Befestigungsschnittstelle (39.1, 39.2) am Gehäuse (11) der Wärmekraftmaschine (10) versehen ist, wobei der Hitzeschild (37) außerdem mindestens eine Indexierungsvorrichtung (40) zum Positionieren des Hitzeschilds (37) relativ zum Pumpenträger (17) umfasst,
**dadurch gekennzeichnet, dass** die Pumpe (15) in einem ringförmigen Dämpfungselement (19) montiert ist, das mit einer Basis (20) versehen ist, die an der Pumpenhalterung (17) befestigt ist.

2. Baugruppe nach Anspruch 1, **dadurch gekennzeichnet, dass** mindestens eine Befestigungsschnittstelle (24.2, 24.3) des Pumpenträgers (17) und eine Befestigungsschnittstelle (39.1, 39.2) des Hitzeschildes (37) mit einem gemeinsamen Befestigungselement (30) zusammenwirken, das die Befestigung der Baugruppe "Pumpenträger (17) - Hitzeschild (37)" am Gehäuse (11) der Wärmekraftmaschine (10) gewährleistet.

3. Baugruppe nach Anspruch 1 oder 2, **dadurch gekennzeichnet, dass** der Pumpenträger (17) vorteilhaft aus einem metallischen Werkstoff, insbesondere Stahl, gefertigt ist.

4. Anordnung nach einem der Ansprüche 1 bis 3, **dadurch gekennzeichnet, dass** die Indexierungsvorrichtung (26) der Pumpenhalterung (17) eine Nase (32) umfasst, die dazu bestimmt ist, mit einer entsprechenden hohlen Form (33) zusammenzuwirken, die im Gehäuse (11) der Wärmekraftmaschine (10) ausgebildet ist.

5. Baugruppe nach einem der Ansprüche 1 bis 4, **dadurch gekennzeichnet, dass** die Befestigungsschnittstellen (24.1, 24.2, 24.3) des Pumpenträgers (17) in zwei unterschiedlichen Ebenen liegen.

6. Anordnung nach einem der Ansprüche 1 bis 5, **dadurch gekennzeichnet, dass** der Hitzeschild (37) einen Körper (47) mit einer Wand (48) in Form eines Zylinderabschnitts und einer querverlaufenden Endwand (49) umfasst.

7. Anordnung nach Anspruch 6, **dadurch gekennzeichnet, dass** sich von der Wand (48) ein hohler Vorsprung (50) in Form eines Zylinderabschnitts erstreckt.

8. Anordnung nach einem der Ansprüche 1 bis 7, **dadurch gekennzeichnet, dass** die Indexierungsvorrichtung (40) des Hitzeschildes (37) ein Loch (42) umfasst.
angeordnet in einer Befestigungsöse (38), die dazu bestimmt ist, mit einer entsprechenden vorspringenden Form (43) zusammenzuwirken, die in der Pumpenhalterung (17) angeordnet ist.

9. Anordnung nach einem der Ansprüche 1 bis 8, **dadurch gekennzeichnet, dass** die Indexierungsvorrichtung (40) des Hitzeschildes (37) einen Haken (45), der in einer Kante einer Befestigungsöse (38) ausgebildet ist, wobei der Haken (45) dazu bestimmt ist, mit einer Kante der Pumpenhalterung (17) zusammenzuwirken.

## Claims

1. Assembly for a motor vehicle comprising:
- a heat engine (10) comprising a casing (11),
- a pump (15),
- a pump support (17) carrying the pump (15),
the pump support (17) comprising attachment interfaces
(24.1, 24.2, 24.3) on the casing (11) of the heat engine (10) and at least one indexing device (26) for positioning said pump support (17) relative to the casing (11) of the heat engine (10), and
- a heat shield (37) comprising attachment lugs (38), each attachment lug (38) being provided with at least one attachment interface (39.1, 39.2) on the casing (11) of the heat engine (10), said heat shield (37) further comprising at least one indexing device (40) for positioning the heat shield (37) relative to the pump support (17),
**characterized in that** the pump (15) is
fitted inside a ring-shaped damping element (19)
provided with a base (20) fixed to the pump support (17).

2. . Assembly according to claim 1, **characterized in that** at least one
fixing interface (24.2, 24.3) of the pump support (17) and one fixing interface (39.1, 39.2) of the heat shield (37) cooperate with a common fixing member (30) ensuring fixing of the "pump support (17)-heat shield (37)" assembly to the casing (11) of the heat engine (10).

3. . Assembly according to claim 1 or 2, **characterized in that** the pump support (17) is advantageously made of a metallic material, in particular steel.

4. . Assembly according to any one of claims 1 to 3, **characterized in that** the indexing device (26) of the pump support (17) comprises a lug (32) intended to cooperate with a corresponding hollow shape (33) formed in the casing (11) of the heat engine (10).

5. . Assembly according to any one of claims 1 to 4, **characterized in that** the fixing interfaces (24.1, 24.2, 24.3) of the pump support (17) are located in two different planes.

6. . Assembly according to any one of claims 1 to 5, **characterized in that** the heat shield (37) comprises a body (47) having a wall (48) in the shape of a portion of a cylinder and a transverse end wall (49).

7. . Assembly according to claim 6, **characterized in that** a hollow protruding portion (50) extends from the wall (48) in the form of a cylindrical portion.

8. . Assembly according to any one of claims 1 to 7, **characterized in that** the indexing device (40) of the heat shield (37) comprises a hole (42) made in a fixing lug (38) intended to cooperate with a corresponding protruding shape (43) formed in the pump support (17).

9. . Assembly according to any one of claims 1 to 8, **characterized in that** the indexing device (40) of the heat shield (37) comprises a hook
(45) formed in an edge of a fixing lug (38), said hook (45) being intended to cooperate with an edge of the pump support (17).
